# EUROPEAN PATENT APPLICATION

(11) **EP 4 549 084 A1**
(43) Date of publication of application: **07.05.2025**
(21) Application number: 24210506.2
(22) Date of filing: 04.11.2024
(51) Int. Cl.: B23Q 1/54

(54) **APPARATUS AND METHOD FOR MACHINING PROFILED BARS**

(30) Priority: 02.11.2023 IT 202300023079
(71) Applicant: Emmegi S.p.A., 41019 Soliera (Modena) (IT)
(72) Inventor: PALTRINIERI, Giovanni, 41126 MODENA (IT)
(74) Representative: Colò, Chiara

(57) **Abstract**

An apparatus for working a profiled bar (2) having a main dimension, comprises an operating head (3) having at least one working tool (8) and a support (11) which supports the operating head (3). The operating head (3) is displaceable along a longitudinal direction (X) in order to be brought to a desired position along the profiled bar (2). The operating head (3) is furthermore displaceable transversely to the longitudinal direction (X) along a first transversal direction (Z) and along a second transversal direction (Y). The operating head (3) is rotatable about a first rotation axis (R1) for working distinct longitudinal surfaces (16) of the profiled bar (2). The apparatus further comprises an actuator (14) for rotating discretely the operating head (3) about a second rotation axis (R2) arranged transversally to the first rotation axis (R1), so that the working tool (8) can act on transversal end sections (15) of the profiled bar (2).

## Description

This invention relates to an apparatus and a method for working profiled bars, in particular profiled bars intended to form doors or windows frames. The profiled bars may be made of metallic materials, for example aluminium, or synthetic polymeric materials, for example polyvinyl chloride (PVC), or composite materials.

In order to perform cutting, milling, drilling and other operations on the profiled bars, it is known to use machine tools with four controlled axes. The prior art machine tools comprise an operating head which includes an electro-spindle having three degrees of freedom in translation (that is to say, the electro-spindle is movable along three directions parallel to respective Cartesian axes perpendicular to each other) and a degree of freedom in rotation.

The prior art machine tools of the type described above may be used for working profiled bars having substantially four longitudinal surfaces or faces, that is to say, a lower face, an upper face and two side faces interposed between the lower face and the upper face. In this case, owing to the above mentioned four degrees of freedom, machine tools of known type are capable of performing mechanical operations on the upper face and on the two side faces.

In some cases, mechanical operations are also required on the head and rear sections of the profiled bars, that is to say, on the transversal end sections, which are arranged transversally to a longitudinal direction along which the profiled bar extends. These mechanical operations cannot be performed with the traditional machines with four controlled axes, of the type described above. In the case of profiled bars which require mechanical operations performed on the transversal end sections, these operations must currently be performed on a different machine tool, which requires longer production times. Alternatively, it is possible to use machines with five controlled axes, which are however expensive and complex, so they are not available in all the production plants.

EP 2684641 discloses a machine tool for working elongate elements, in particular profiled bars. The machine tool disclosed in EP 2684641 comprises a first body mounted slidably on a frame of the machine tool, in such a way as to be able to slide along three directions at right angles to each other. The first body supports a second body which can rotate by 360° relative to the first body about a first axis arranged vertically. The second body supports a third body which can rotate by 90° about a second axis arranged perpendicularly to the first axis, that is to say, horizontally.

The third body of the machine tool disclosed in EP 2684641 comprises a tool rotatable about an rotation axis. When the tool is positioned in such a way that its rotation axis is arranged vertically, the rotation axis of the tool is spaced from the first axis around which the first body is rotatable, which is also arranged vertically. More specifically, an ideal vertical plane containing the rotation axis of the tool and parallel to a longitudinal direction in which the profiled bar extends is spaced from a further ideal vertical plane containing the first axis and parallel to the above-mentioned longitudinal direction.

The machine tool disclosed in EP 2684641 has five controlled axes, because it has three degrees of freedom in translation and two degrees of freedom in rotation (rotation about the first axis and rotation about the second axis).

The machine tool disclosed in EP 2684641 also allows the two transversal end sections of the profiled bar to be worked, as well as the longitudinal faces thereof. However, the machine tool disclosed in EP 2684641 is quite expensive, in particular because both the rotation about the first axis and the rotation about the second axis have to be controlled precisely and continuously.

Moreover, in order to allow the second body to rotate by 360° about the first rotation axis relative to the first body, the first body has to be positioned in a cantilever manner relative to a supporting structure of the machine tool, in such a way that the second body is sufficiently far from the supporting structure to be able to rotate by 360° about the first rotation axis (vertical) without interfering with the supporting structure. This makes it necessary to adopt a particularly bulky and not very slender shape for the second body. Furthermore, it is quite complicated to wire this part of the machine, that is to say, to bring to the second body and to the third body the cables necessary for their operation.

An object of the invention is to improve the machines and the methods for working profiled bars.

Another object is to provide a machine and a method which allow also the transversal end sections of a profiled bar to be worked in a simple and inexpensive manner.

A further object is to allow the transversal end sections of a profiled bar to be machined without using complicated machines.

Still another object is to make it possible to work the transversal end sections of a profiled bar without moving the profiled bar onto different machines.

In a first aspect of the invention, there is provided an apparatus for working a profiled bar having a main dimension, comprising an operating head having at least one working tool and a support which supports the operating head, wherein the operating head is displaceable along a longitudinal direction in order to be brought to a desired position along the profiled bar, the operating head being furthermore displaceable transversely to the longitudinal direction along a first transversal direction and along a second transversal direction, the operating head being rotatable about a first rotation axis for working distinct longitudinal surfaces of the profiled bar, characterised in that it comprises an actuator for rotating in steps the operating head about a second rotation axis arranged transversally to the first rotation axis, so that the working tool can act on transversal end sections of the profiled bar.

The apparatus according to the first aspect of the invention is a machine with four controlled axes, since the operating head has three degrees of freedom in translation and a degree of freedom in rotation, about the first rotation axis.

The three degrees of freedom in translation correspond to three relative linear movements (along three directions at right angles to each other) between the operating head and the profiled bar to be machined. These relative linear movements may be performed by moving the operating head and leaving the profiled bar stationary, or vice versa, along each of the three orthogonal directions.

Owing to the actuator which controls the rotation of the operating head about the second rotation axis, a further movement is introduced which allows the operating head to be positioned in such a way as to work the transversal end sections of the profiled bar, that is to say, the transversal sections which delimit the profiled bar transversely relative to its main dimension.

This further movement occurs in a simple manner and does not require expensive devices. The actuator allows the operating head to be rotated by steps about the second rotation axis without introducing excessive constructional complications, such as those which would be necessary to have a fifth controlled axis.

At the same time, the actuator allows the working tool to be positioned in front of the transversal end sections, that is to say, in front of a transversal head section and a transversal rear section of the profiled bar, so that it is possible to perform the necessary mechanical operations on the transversal end sections, on the same apparatus which performs mechanical operations on the longitudinal surfaces of the profiled bar, without moving the profiled bar and positioning it on a different apparatus.

The operating head may perform a maximum rotation about the first rotation axis of 180°, in particular continuously.

The operating head may perform a maximum rotation of 90° about the second rotation axis.

In particular, the operating head is supported by a support which can rotate discretely by 90° about the second rotation axis, so as to be positioned only in two configurations.

In an embodiment, the second rotation axis is aligned vertically with an axis about which the tool is rotatable, in an operating position in which the operating head is positioned in such a way that the axis of the tool is vertical.

This makes it possible to obtain a working unit which is compact, simple and easy to wire.

In an embodiment, the actuator is a pneumatic actuator.

The pneumatic actuator is a particularly simple example of an actuator which may be used for rotating the operating head by steps about the second rotation axis.

In an embodiment, the second rotation axis is parallel to the first transversal direction.

In particular, the second rotation axis may be vertical.

In an embodiment, the first rotation axis is arranged transversely, for example perpendicularly to the longitudinal direction.

In particular, the first rotation axis may be horizontal.

In an embodiment, the first rotation axis is arranged transversely, in particular perpendicularly, to the second rotation axis.

In an embodiment, the second rotation axis is parallel to a plane on which the transversal end section of the profiled bar lies.

For example, the transversal head section and/or the transversal rear section of the profiled bar may lie in a vertical plane, when the profiled bar is positioned on the apparatus for being worked.

In a second aspect of the invention, there is provided a method for working a profiled bar having a main dimension, wherein an apparatus is used which comprises an operating head having at least one working tool and a support which supports the operating head, the operating head being displaceable along a longitudinal direction parallel to the main dimension of the profiled bar in order to be carried to a desired position along the profiled bar, the operating head being furthermore displaceable transversely to the longitudinal direction along a first transversal direction and along a second transversal direction, the operating head being rotatable about a first rotation axis for working distinct longitudinal surfaces of the profiled bar, the profiled bar being delimited by a pair of transversal end sections arranged transversally to the main dimension, characterised in that the method comprises the step of performing a mechanical operation at least on a transversal end section of the profiled bar by rotating the operating head about a second rotation axis arranged transversally to the first rotation axis, the operating head being rotatable in steps about the second rotation axis.

Owing to the second aspect of the invention, it is possible to obtain the technical effects and the advantages described with reference to the first aspect of the invention.

The invention can be better understood and implemented with reference to the accompanying drawings which illustrate a non-limiting example embodiment of it and in which:
Figure 1 is a schematic perspective view showing an operating head positioned according to alternative operating positions for working distinct portions of a profiled bar;
Figure 2 is a schematic perspective view of the operating head of Figure 1, positioned in such a way as to work a transversal end section of the profiled bar;
Figure 3 is a view like that of Figure 2, wherein the operating head is positioned in such a way as to work a further transversal end section of the profiled bar;
Figure 4 is a view like that of Figure 2, wherein the operating head is positioned in such a way as to work an upper face of the profiled bar;
Figure 5 is a view like that of Figure 2, wherein the operating head is positioned in such a way as to work a first side face of the profiled bar;
Figure 6 is a view like that of Figure 2, wherein the operating head is positioned in such a way as to work a second side face of the profiled bar, which is opposite the side face of Figure 5.

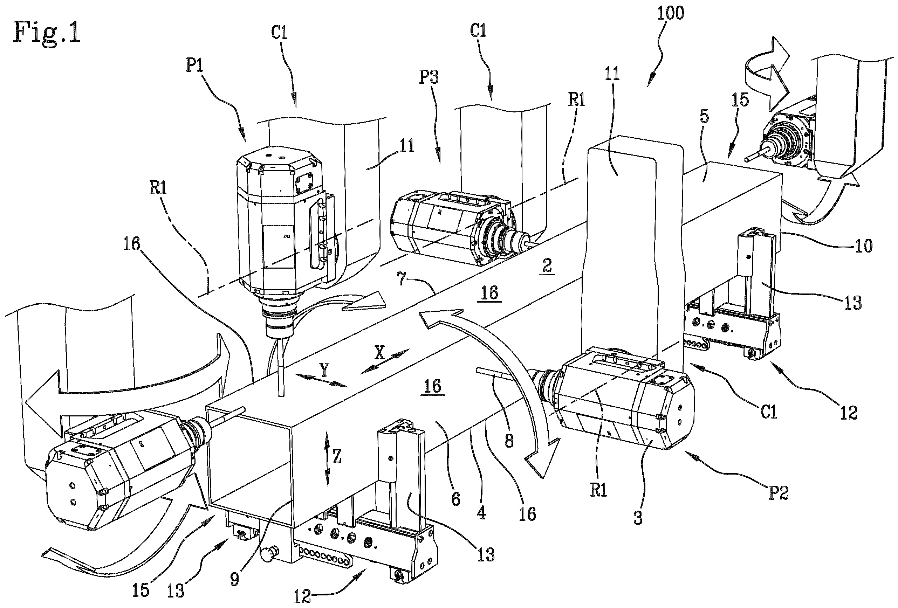

Figures 1 to 6 schematically show an apparatus 100 for working profiled bars 2, one of which is shown in Figure 1.

The apparatus 100 comprises a working unit 1 by means of which mechanical operations can be performed on the profiled bar 2. The working unit 1 comprises an operating head 3, which may include an electro-spindle. The operating head 3 supports a tool 8, which can be selected according to the type of working operation which the operating head 3 must perform. The operating head 3 is able to perform mechanical operations of various types, for example of drilling, milling and the like, on the profiled bars 2.

The profiled bars 2 may be made of different types of materials, for example metallic materials such as aluminium, synthetic polymeric materials such as polyvinyl chloride (PVC), composite materials and the like. The profiled bars 2 may have a full transversal cross-section, or a hollow transversal cross-section.

Figure 1 shows the bar 2 schematically as having a hollow quadrangular transversal cross-section, in particular square. The working unit 1 may also be used for working profiled bars 2 having a more complicated shape than that shown in Figure 1, for example comprising ribs, splines, inclined planes, grooves and reinforcement tabs.

The profiled bar 2 has a main dimension or length along a longitudinal direction X.

Generally speaking, in the profiled bar 2 it is possible to identify a plurality of longitudinal surfaces 16, each of which extends mainly along the main dimension or length of the profiled bar 2. The longitudinal surfaces 16 can comprise a lower face 4, an upper face 5, a first side face 6 and a second side face 7. The upper face 5 is generally opposite the lower face 4. The first side face 6 is generally opposite the second side face 7 and is interposed between the lower face 4 and the upper face 5. The second side face 7 is also interposed between the lower face 4 and the upper face 5. The expressions "upper face", "lower face", "first side face" and "second side face" refer to the profiled bar 2 positioned on the apparatus 1, with the main dimension arranged along the longitudinal direction X.

In the example shown, the lower face 4 and the upper face 5 are positioned substantially horizontally, whilst the first side face 6 and the second side face 7 are arranged substantially vertically. However, this condition is not necessary and, according to an alternative embodiment, the lower face 4 and the upper face 5 might be inclined relative to the horizontal direction, whilst the side faces 6 and 7 could be inclined relative to the vertical direction.

Each face selected between the lower face 4, the upper face 5 and the side faces 6 and 7 extends mainly in a direction parallel to the longitudinal direction X.

The profiled bar 2 is also delimited by a pair of transversal end sections 15, which may comprise a transversal head section 9 and a transversal rear section 10. The transversal end sections 15 extend transversally, for example perpendicularly, to the main dimension of the profiled bar 2. When the latter is positioned on the apparatus 1, the transversal end sections 15 extend transversally, for example perpendicularly, to the longitudinal direction X. The transversal end sections 15 may lie on respective planes arranged transversally, for example perpendicularly, to the longitudinal direction X.

According to the example shown, when the profiled bar 2 is positioned on the apparatus 1, the transversal end sections 15 extend on respective vertical planes.

The working unit 1 further comprises an elongate support 11, for example an arm, which supports the operating head 3. The elongate support 11 may in turn be supported by a supporting structure of the apparatus 100, not illustrated, if necessary with the interposing of one or more components.

The apparatus 100 further comprises a supporting device for supporting the profiled bar 2 during the mechanical operations. The supporting device may comprise at least one gripping unit 12 for keeping the profiled bar 2 stationary during the mechanical operations. There may be several gripping units 12, distributed along the longitudinal direction X, to support the profiled bar 2 in a plurality of regions along its main dimension.

Each gripping unit 12 may comprise two jaws 13, movable relative to each other between a disengagement configuration and a clamping configuration. In the clamping configuration, the profiled bar 2 is clamped between the jaws 13, so that the profiled bar 2 does not move in an unwanted manner when it is worked by the working tool 8. In the disengagement configuration, the jaws 13 have moved away from each other so as to leave the profiled bar 2 free, so that the latter can be removed from the working tool after being worked, and/or a new profiled bar 2 can be inserted between the jaws 13.

The gripping unit 12 may have a resting surface, on which the profiled bar 2 can be rested whilst the required mechanical operations are performed. The apparatus 100 is a machine with four controlled axes. In other words, the operating head 3 has four degrees of freedom and its position relative to each of these degrees of freedom can be controlled with precision.

In particular, the operating head 3 has three degrees of freedom in translation and a degree of freedom in rotation.

As regards the three degrees of freedom in translation, the apparatus 100 is configured in such a way as to make possible, between the profiled bar 2 and the operating head 3, a relative linear translation movement along three directions at right angles to each other.

For example, the operating head 3 may be moved linearly along the longitudinal direction X relative to the supporting structure of the apparatus 100, for being moved parallel to the main dimension of the profiled bar 2 and carried to the portion of the profiled bar 2 in which the working tool 8 must perform the required mechanical operations.

The operating head 3 may also be linearly moved along a first transversal direction Z arranged transversally, for example perpendicularly, to the longitudinal direction X. The first transversal direction Z may be a vertical direction.

The profiled bar 2 may be linearly moved along a second transversal direction Y arranged transversally, for example perpendicularly, to the longitudinal direction X. The second transversal direction Y may be perpendicular to the first transversal direction Z. The second transversal direction Y may be, for example, a horizontal direction.

According to the example shown, the longitudinal direction X, the first transversal direction Z and the second transversal direction Y are perpendicular to each other, that is to say, they are oriented according to respective Cartesian axes at right angles to each other.

According to the example shown, the operating head 3 is displaceable along the longitudinal direction X, and along the first transversal direction Z because the elongate support 11 can move along the above-mentioned directions relative to the supporting structure of the apparatus 100. Moreover, according to the example shown the profiled bar 2 is movable along the second transversal direction Y relative to the operating head 3.

Relative movements of the operating head 3 and of the profiled bar 2 are therefore possible along each of the three directions X, Y and Z.

Driving means, not illustrated, are provided for creating a relative movement between the operating head 3 and the profiled bar 2 along the above-mentioned three directions. In particular, the driving means may comprise a first driving device for moving the elongate support 11 along the longitudinal direction X, a second driving device for moving the profiled bar 2 along the second transversal direction Y, and a third driving device for moving the elongate support 11 along the first transversal direction Z. The first driving device, the second driving device and the third driving device may be distinct from each other and independent of each other.

Owing to the relative movements between the profiled bar 2 and the operating head 3 along the first transversal direction Z, along the second transversal direction Y and along the longitudinal direction X, the operating head 3 may reach the zone of the profiled bar 2 which must be worked.

The operating head 3 is furthermore rotatable about a first rotation axis R1, which is arranged parallel to the longitudinal direction X. According to the example shown, the rotation axis R1 is a horizontal axis.

In order to rotate the operating head 3 about the first rotation axis R1, there is provided a movement device (not illustrated), for example an electric motor, which rotates the operating head 3 about the first rotation axis R1 relative to the elongate support 11.

By rotating the operating head 3 about the first rotation axis R1, it is possible to perform mechanical operations on different faces of the profiled bar 2.

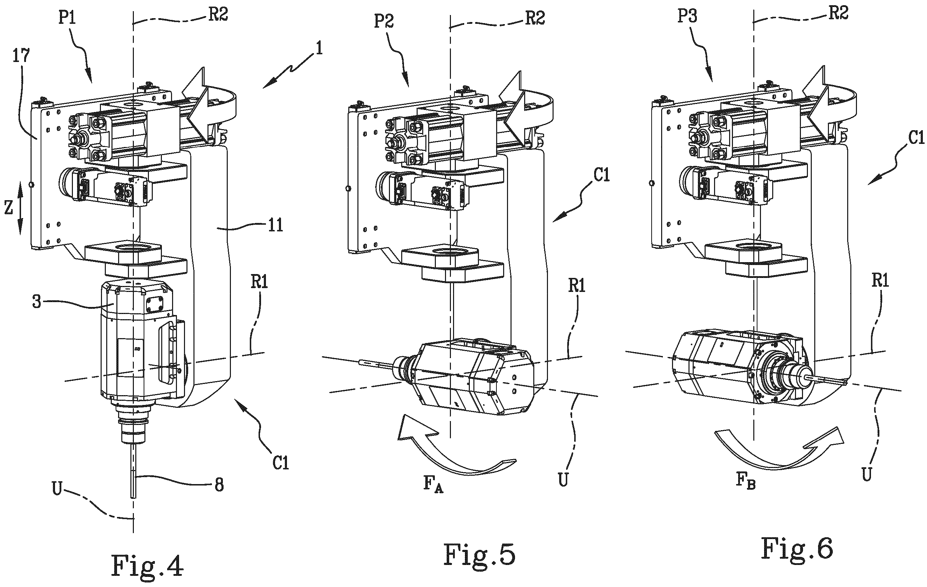

For example, Figure 4 shows the operating head 3 arranged in a first operating position P1, in which the operating head 3 is able to perform mechanical operations on the upper face 5 of the profiled bar 2. The first operating position P1 is also shown in Figure 1, which shows the same operating head 3 arranged in a plurality of different operating positions for performing mechanical operations on different zones of the profiled bar 2.

In the first operating position P1, the operating head 3 is positioned in such a way that the working tool 8 faces downwards.

It is possible to define an axis U of the working tool 8, which may be, for example, an axis about which the working tool 8 is rotatable. In the first operating position P1, the axis U is parallel to the first transversal direction Z, that is to say, it is directed vertically. The working tool 8 is substantially aligned with the elongate support 11. According to the example shown, the elongate support 11 extends mainly along the first transversal direction Z, that is to say, along a vertical direction.

In the first operating position P1, the angle formed between the axis U of the working tool 8 and the first transversal direction Z is 0°. In this position, the working tool 8 faces downwards to operate on the upper face 5 of the profiled bar 2.

It is possible to rotate the operating head 3 by an angle of 90° in a clockwise direction relative to the first operating position P1, as indicated by the arrow F_{A} in Figure 5. In this way, a second operating position P2 is reached, shown in Figures 5 and 1, in which the angle formed between the axis U of the working tool 8 and the first transversal direction Z is conventionally indicated as equal to -90°. In this position, the operating head 3 is able to work a side face of the profiled bar 2, in particular the first side face 6.

If, on the other hand, the operating head 3 is rotated by an angle of 90° in an anticlockwise direction relative to the first operating position P1, as indicated by the arrow F_{B} in Figure 6, a third operating position P3 is reached, shown in Figures 6 and 1. In the third operating position P3, the angle formed between the axis U of the working tool 8 and the first transversal direction Z is conventionally indicated as equal to 90°. In this position, the operating head 3 is able to work a further side face of the profiled bar 2, in particular the second side face 7 which is opposite the first side face 6 on which the operating head 3 acted in the second operating position P2.

If the side faces of the profiled bar 2 are not vertical as in the example illustrated, but are arranged obliquely relative to the vertical direction, the operating head 3 may be positioned in such a way that the angle formed between the axis U of the working tool 8 and the first transversal direction Z is different from 90°, in such a way that the working tool 8 is positioned obliquely relative to the vertical direction.

This is made possible by the fact that the position of the operating head 3 about the first rotation axis R1 can be controlled with precision and the operating head 3 can be locked in any desired angular position about the first rotation axis R1.

In other words, the operating head 3 may rotate continuously about the first rotation axis R1, to be positioned at any desired angular position about the first rotation axis R1.

The movement device which rotates the operating head 3 about the first rotation axis R1 is configured for rotating the operating head 3, relative to the elongate support 11, along an angular stroke having a maximum angular extension of 180° about the first rotation axis R1. The angular stroke has two limit positions which coincide, respectively, with the second operating position P2, in which the angle formed between the axis U of the working tool 8 and the first transversal direction Z is equal to -90° and the third operating position P3, in which the angle formed between the axis U of the working tool 8 and the first transversal direction Z is equal to 90°. The operating head 3 may adopt each intermediate position interposed between the above-mentioned limit positions, since the movement device is configured for rotating the operating head 3 continuously between an end position defined by the second operating position P2 and a further end position defined by the third operating position P3.

The working unit 1 further comprises an actuator 14 for rotating the operating head 3 by steps about a second rotation axis R2, in such a way that the operating head 3 can act on the transversal end sections 15 of the profiled bar 2, that is to say, on the transversal head section 9 and/or on the transversal rear section 10.

The second rotation axis R2 is arranged transversely, in particular perpendicularly, to the first rotation axis R1.

According to the example shown, the second rotation axis R2 is arranged vertically. More generally speaking, the second rotation axis R2 may be parallel to the first transversal direction Z.

The second rotation axis R2 may be parallel to a plane on which lies, at least partly, the transversal head section 9 and/or the transversal rear section 10 of the profiled bar 2. According to the example shown, in which the end sections 15 lie on a vertical plane, the second rotation axis R2 is also vertical.

The actuator 14 is configured for modifying the angular position of the operating head 3 about the second rotation axis R2 by rotating the elongate support 11, which supports the operating head 3, about the second rotation axis R2.

The actuator 14 may be interposed between the elongate support 11 and a supporting plate or slide 17 to which the elongate support 11 is rotatably connected.

The slide 17 may be mounted on the supporting structure of the apparatus 100 and may be movable along the first transversal direction Z. The slide 17 may be supported by an intermediate component, in turn movable along the longitudinal direction X relative to the supporting structure. According to the example shown, the gripping units 12 are movable along the second transversal direction Y for moving the profiled bar 2 along that direction and bringing the zone of the profiled bar 2 to be worked close to the working tool 8.

The actuator 14 may be a pneumatic actuator, in particular a pneumatic cylinder, which is particularly simple and does not have an excessive cost. According to an alternative embodiment, it is also possible to use an actuator of a different type.

The actuator 14 is configured for rotating the elongate support 11 relative to the slide 17 by steps about the second rotation axis R2. A bearing 18 may be interposed between the slide 17 and the elongate support 11 to allow the rotation of the latter about the second rotation axis R2.

As shown in Figure 4, when the working tool 8 is positioned in such a way that its axis U is vertical (which occurs, in the example illustrated, in the first operating position P1), the second rotation axis R2 is aligned vertically with the axis U of the working tool 8. This makes the working unit 1 particularly compact and light. The wiring of the working unit 1 is also simplified.

As mentioned above, the actuator 14 is configured for moving in steps the operating head 3, or more precisely the elongate support 11, about the second rotation axis R2. This means that the operating head 3 cannot be positioned at any desired angular position about the second rotation axis R2. The operating head 3 may be positioned only in a discrete and limited number of positions about the second rotation axis R2. In other words, the operating head 3 can rotate about the second rotation axis R2 in an indexed manner.

The second rotation axis R2 is not therefore a "controlled axis" in the sense that is normally given to this expression in the context of machine tools.

According to the example shown, the elongate support 11, which supports the operating head 13, may be arranged in two different configurations about the second rotation axis R2.

More specifically, the elongate support 11 may be positioned in a first operating configuration C1, which corresponds to a rotation of 0° about the second rotation axis R2, when a face of the profiled bar 2 arranged along the main dimension of the profiled bar 2 is to be worked, that is to say, along the longitudinal direction X.

In order to perform mechanical operations on the upper face 5, on the first side face 6 and/or on the second side face 7, the elongate support 11 is arranged in the first operating configuration C1. The operating head may in turn be arranged in the first operating position P1, or in the second operating position P2, or in the third operating position P3, as described above with reference to Figures 4 to 6.

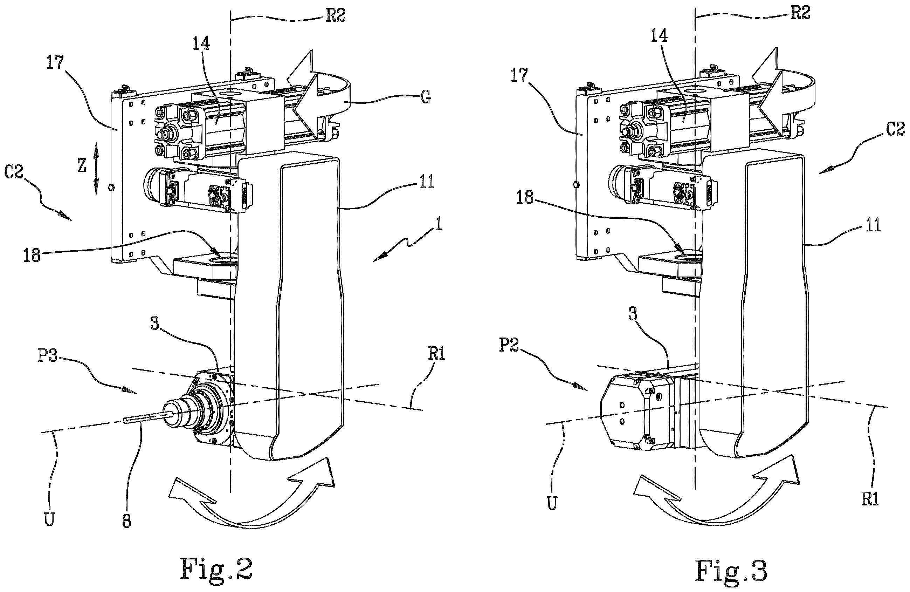

When mechanical operations are to be performed on a transversal end section 15, for example on the transversal head section 9, the operating head 3 is rotated about the second rotation axis R2. This is performed by rotating the elongate support 11 about the second rotation axis R2, as indicated by the arrow G in Figure 2. In this way, a second operating configuration C2 is reached, in which the working tool 8 can act on the transversal end sections 15.

According to the example shown, in order to pass from the first operating configuration C1 to the second operating configuration C2 there is provided a rotation by 90° of the operating head 3, or more specifically of the elongate support 11, about the second rotation axis R2.

When the operating head 3 is in the second operating configuration C2, the axis U of the working tool 8 may be positioned in such a way as to be parallel to the longitudinal direction X, so that the working tool 8 can act on the transversal end sections 15.

In particular, in the second operating configuration C2, the operating head 3 can be rotated about the first rotation axis R1 by an angle of -90°, corresponding to the second operating position P2, to perform mechanical operations on the transversal head section 9, as shown in Figure 3.

In order to perform mechanical operations on the transversal rear section 10, the operating head 3, already positioned in the second operating configuration C2, is rotated by an angle of 90° about the first rotation axis R1, corresponding to the third operating position P3, as shown in Figure 2. The working tool 8 is thus moved to a position facing the transversal rear section 10, which may consequently be machined.

According to the example shown, only two different angular positions of the elongate support 11 (and consequently of the operating head 3) are possible about the second rotation axis R2. These two angular positions differ by a rotation of 90° about the second rotation axis R2.

Moving the elongate support 11 about the second rotation axis R2 is therefore particularly simple, since it is sufficient to use an actuator which is able to rotate the elongate support 11 between a very limited number of possible angular positions about the second rotation axis R2, for example between only two angular positions.

## Claims

1. An apparatus for working a profiled bar (2) having a main dimension, the apparatus comprising:
- an operating head (3) having at least one working tool (8),
- a support (11) which supports the operating head (3),
- a slide (17) to which the support (11) is connected,
- driving means for providing a relative linear movement between the operating head (3) and the profiled bar (2) along a longitudinal direction (X), along a first transversal direction (Z) and along a second transversal direction (Y) arranged transversally to the longitudinal direction (X),
- a movement device for rotating the operating head (3) relative to the support (11) about a first rotation axis (R1) in order to work distinct longitudinal surfaces (16) of the profiled bar (2),
- an actuator (14) for rotating the support (11) relative to the slide (17) about a second rotation axis (R2) arranged transversely to the first rotation axis (R1), so that the working tool (8) can act on transversal end sections (15) of the profiled bar (2),
wherein the movement device is configured to rotate the operating head (3) with an angular stroke of 180° about the first rotation axis (R1), and the actuator (14) is configured to move the support (11) discretely for displacing the operating head (3) between two distinct operating configurations (C1, C2) with a rotation of 90° about the second rotation axis (R2).

2. The apparatus according to claim 1, wherein the working tool (8) is rotatable about an axis (U), and wherein the axis (U) is aligned with the second rotation axis (R2) in an operating position (P1) in which the axis (U) is arranged vertically.

3. The apparatus according to claim 1 or 2, wherein the actuator (14) is interposed between the slide (17) and the support (11).

4. The apparatus according to any preceding claim, wherein the second rotation axis (R2) is parallel to the first transversal direction (Z).

5. The apparatus according to any preceding claim, wherein the second rotation axis (R2) is vertical.

6. The apparatus according to any preceding claim, wherein the second rotation axis (R2) is perpendicular to the first rotation axis (R1).

7. The apparatus according to any preceding claim, wherein the actuator (14) is a pneumatic actuator.

8. The apparatus according to any preceding claim, wherein the support (11) is an arm.

9. A method for working a profiled bar (2) having a main dimension, wherein an apparatus (1) is used which comprises an operating head (3) having at least one working tool (8) and a support (11) which supports the operating head (3), a relative linear movement being provided between the operating head (3) and the profiled bar (2) along a longitudinal direction (X) parallel to the main dimension of the profiled bar (2), along a first transversal direction (Z) and along a second transversal direction (Y) arranged transversally to the longitudinal direction (X), the operating head (3) being rotatable about a first rotation axis (R1) for working distinct side surfaces (16) of the profiled bar (2), the profiled bar (2) being delimited by a pair of transversal end sections (15) arranged transversally to the main dimension, wherein the method comprises the step of performing a mechanical operation at least on a transversal end section (15) of the profiled bar (2) after positioning the working tool (8) in a position facing the transversal end section (15) by rotating the support (11) about a second rotation axis (R2) arranged transversally to the first rotation axis (R1), wherein the operating head (3) is rotatable about the first rotation axis (R1) with a maximum rotation of 180° and wherein the support (11) is rotatable about the second rotation axis (R2) between two distinct configurations with a maximum rotation of 90°.

10. The method according to claim 9, wherein the second rotation axis (R2) is parallel to a plane on which the transversal end section (15) of the profiled bar (2) lies.
